# EUROPEAN PATENT SPECIFICATION

(11) **EP 3 045 031 B1**
(45) Date of publication and mention of the grant of the patent: **26.02.2020**
(21) Application number: 14843546.4
(22) Date of filing: 12.09.2014
(51) Int. Cl.: A01D 43/063

(54) **COLLECTION BOX FOR GRASS MOWER**
AUFFANGBEHÄLTER FÜR RASENMÄHER
BOÎTE DE COLLECTE POUR UNE TONDEUSE

(30) Priority: 13.09.2013 CN 201310417184
(43) Date of publication of application: 20.07.2016
(73) Proprietor: Suzhou Cleva Electric Appliance Co., Ltd., Suzhou City 215122, Jiangsu province (CN)
(72) Inventor: WEI, Juan, Suzhou City 215122, Jiangsu province (CN); WANG, Qidong, Suzhou City 215122, Jiangsu province (CN)
(74) Representative: Orr, Robert
(86) International application number: PCT/CN2014/086347
(87) International publication number: WO 2015/035930

(56) References cited:
- CN-A- 102 668 807
- CN-A- 104 025 800
- CN-U- 201 957 454
- CN-U- 203 233 690
- CN-U- 203 482 629
- CN-Y- 2 231 923
- CN-Y- 201 430 783
- FR-A1- 2 728 136
- US-A- 3 732 675
- US-B1- 7 617 663

## Description

### TECHNICAL FIELD

The present invention relates to a collection box for a grass mower.

### BACKGROUND ART

A gardening tool collection box is usually used for collecting wastes produced during or after the operation of a gardening tool, for example, a grass mower collection box (usually called as grass box as well) is just used for collecting grass clippings produced during a mowing operation, wherein the grass clippings enter the collection box with an air flow, and thus being collected together, so that the grass clippings are prevented from being scattered on a grass lawn. The collection box and the machine body of the gardening tool are detachable; when the collection box is full of the grass clippings, a user may dismount the collection box from the machine body, and then clean the collection box clearly. Because the collection box needs a certain space for containing, the collection box will be usually designed as big as possible so as to enlarge the collection capacity. However, the larger the collection box is, the larger the occupied space thereof is, which causes inconvenience to transportation and collection.

US 3732675 discloses a grass cuttings catcher for a rotary type mower, the frame members and the shroud of which define a chamber for the storage of the cuttings. The catcher is characterized by upper and lower frame members having a toggle connection therebetween whereby the catcher may be collapsed and stored readily.

### SUMMARY OF THE INVENTION

An object of the invention is to solve the above-mentioned defects of the prior art.

The above object is achieved by the features of claim 1.

The present invention provides a foldable collection box for a grass mower, which includes an upper cover, a bottom plate, side edge portions and support assemblies, wherein the support assemblies are disposed between the upper cover and the bottom plate, the support assembly includes an upper arm portion, a lower arm portion, and a rotating portion, the upper arm portion and the lower arm portion can rotate oppositely around a rotary shaft through the rotating portion, and the collection box at least includes two support assemblies. The invention is characterized by the fact that the upper cover of the collection box is provided with an adaption groove and a fixing element, and the bottom plate is provided with a clamping groove and a fixing plate.

Preferably, the rotary shaft is a shaft line extending in front and behind the collection box.

Preferably, the lower arm portion can rotate towards the inside of the collection box around the rotary shaft.

Preferably, the rotating portion includes a first adaption portion and a second adaption portion, wherein the first adaption portion and the upper arm portion are integrated, and the second adaption portion and the lower arm portion are integrated.

Preferably, both the first adaption portion and the second adaption portion are provided with a through hole.

Preferably, the collection box is provided with a grass inlet, and the support assemblies are arranged at the two sides of the grass inlet.

Preferably, the side edge portions are made of flexible materials.

Preferably, the upper arm portion includes a first cross arm and a first vertical arm, the lower arm portion includes a second cross arm and a second vertical arm, the first cross arm is adapted with the adaption groove, and the second cross arm is adapted with the clamping groove.

Preferably, the upper cover is further provided with a washer which is fixed on the upper cover through a screw and limits the first cross arm.

The present invention has the following advantageous technical effects: according to the present invention, the support assemblies are disposed on the gardening tool collection box, so that the collection box having the support assemblies can be folded to be stored, and occupied space of the collection box is greatly reduced; meanwhile, the support assembly has a simple structure and has a small number of parts, and the weight of the collection box is reduced.

### BRIEF DESCRIPTION OF THE DRAWINGS

Fig. 1 is a schematic diagram of a gardening tool, according to an embodiment of the present invention.
Fig. 2 is a schematic diagram of a collection box, according to the embodiment of the present invention.
Fig. 3 is an exploded view of the collection box, according to the embodiment of the present invention.
Fig. 4 is a schematic diagram of an upper cover of the collection box, according to the embodiment of the present invention.
Fig. 5 is a schematic diagram of a bottom plate of the collection box, according to the embodiment of the present invention.
Fig. 6 is a rotating schematic diagram of support assemblies of the collection box, according to the embodiment of the present invention.
Fig. 7 is a schematic diagram of support assemblies of the collection box during folding, according to the embodiment of the present invention.
Fig. 8 is a schematic diagram of a folding state of the collection box during folding, according to the embodiment of the present invention.

### DETAILED DESCRIPTION OF THE PREFERRED EMBODIMENTS

The present invention will be further explained in details hereinafter with reference to the drawings and embodiments.

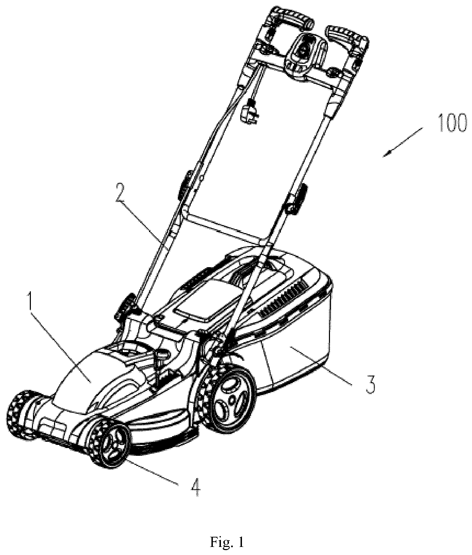

Fig.1 shows a gardening tool, according to an embodiment of the present invention, which is a grass mower, wherein the grass mower 100 includes a machine body 1, a push rod assembly 2, a collection box 3 and a roller wheel 4. The inside of the machine body 1 is provided with a motor for driving a blade to mow. The perimeter of the machine body 1 is provided with the roller wheel 4 which can facilitate the grass mower to move. The collection box 3 is disposed behind the machine body 1 for collecting the grass clippings cut off by the blade, and the surrounding of the collection box is provided with a plurality of through holes so that air flows entering the collection box can be eliminated from the through holes. The push rod assembly 2 is arranged above the collection box 3, and the push rod assembly 2 is provided with a control knob so that the user can control the operation of the grass mower.

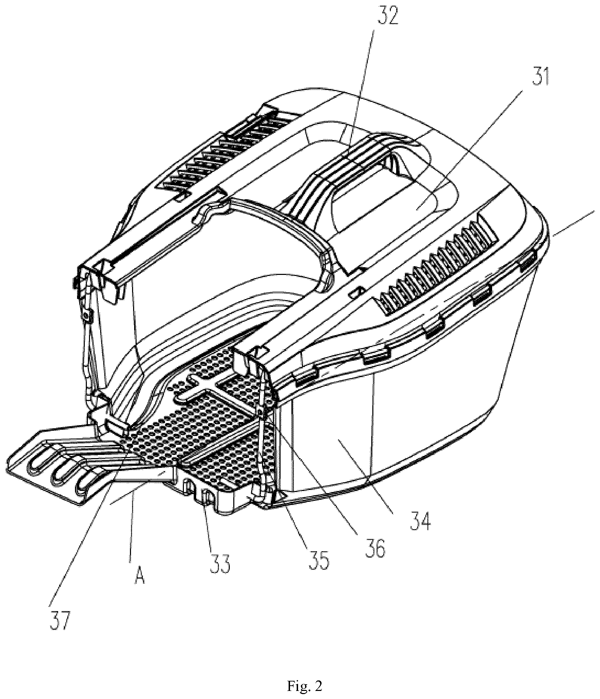

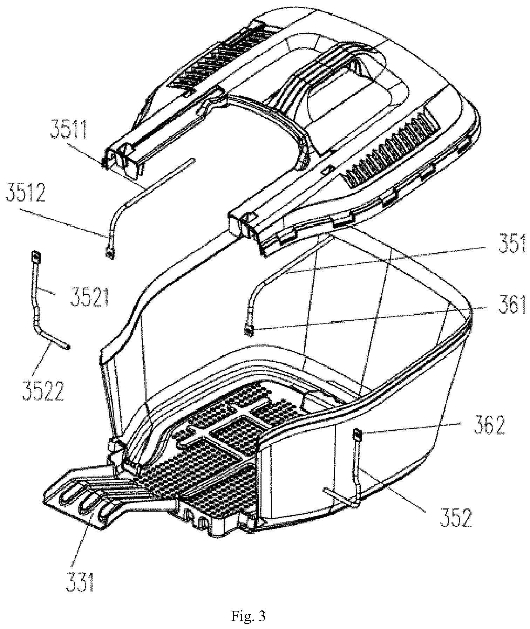

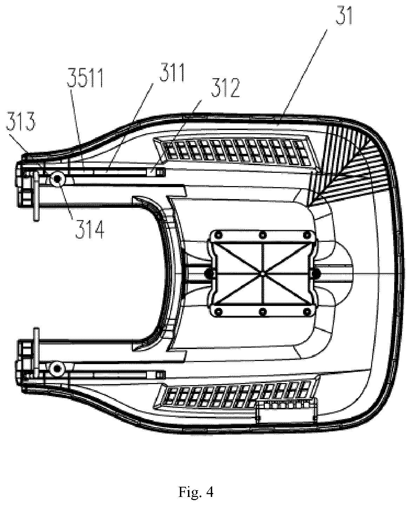

As shown in Fig. 2 to Fig. 5, the collection box 3 includes an upper cover 31, a lifting handle 32, a bottom plate 33, side edge portions 34, support assemblies 35, and a grass inlet 37. The grass clippings cut off by the grass mower are fed into the collection box 3 through the grass inlet 37. The front end of the bottom plate 33 is provided with baffles 331, which can prevent the grass clippings from falling off to the ground through a gap between the grass inlet and the machine body. In the embodiment, the support assembly 35 has two identical support assemblies 35 which are oppositely disposed at the two sides of the grass inlet 37. The support assembly is made of a wire, and includes a rotating portion 36, an upper arm portion 351 and a lower arm portion 352, and the rotating portion 36 enables the upper arm portion 351 and the lower arm portion 352 to rotate oppositely round a rotary shaft A. The upper arm portion 351 is provided with a first adaption portion 361, the lower arm portion 352 is provided with a second adaption portion 362, the rotating portion 36 includes the first adaption portion 361 and the second adaption portion 362, the first and second adaption portions are respectively provided with a through hole, the two adaption portions are fixed through a pin so that the two are not departed; and meanwhile, the first adaption portion and the second adaption portion can rotate oppositely. In the embodiment, the first adaption portion and the second adaption portion are respectively integrated with the upper arm portion and the lower arm portion. Those skilled in the art may understand there are multiple replaceable manners in the known mechanical design field to enable the upper arm portion and the lower arm portion to rotate oppositely. The upper arm portion 351 is of an L-shape approximately, which includes a first cross arm 3511 and a first vertical arm 3512. The upper arm portion 351 is adapted with the upper cover 351. To be specific, the upper cover 351 is provided with an adaption groove 311, at least a part of the first cross arm 3511 is inserted into the adaption groove 311, and a fixing element 312 on the upper cover fixes the first cross arm 3511 in the adaption groove. Further, the upper cover is further provided with a washer 313, which is fixed on the upper cover 351 through a screw 314, and compresses the first cross arm 3511 at the same time, so as to further clamp the upper arm portion tightly. The lower arm portion 352 includes a second cross arm 3522 and a second vertical arm 3521, wherein the lower arm portion is adapted with the bottom plate 33. To be specific, the bottom plate 33 is provided with a clamping groove 331, the second cross arm 3522 is inserted into the clamping groove 331, and limits the second cross arm 3522 through a fixing plate 332.

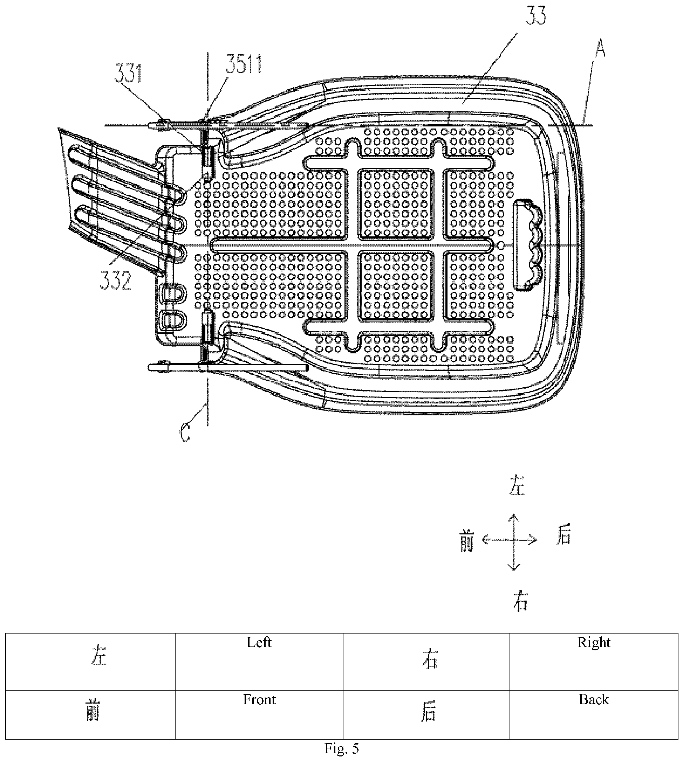

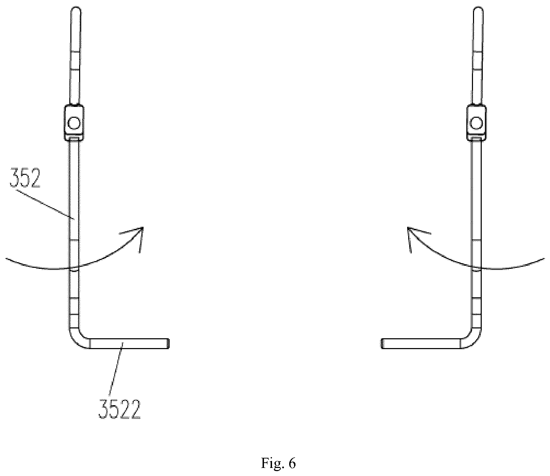

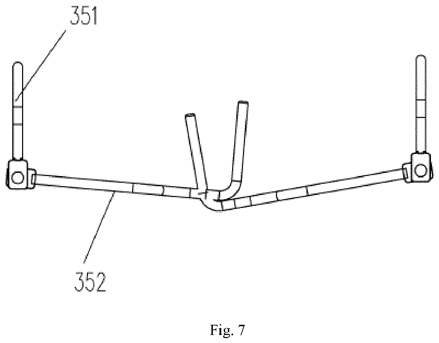

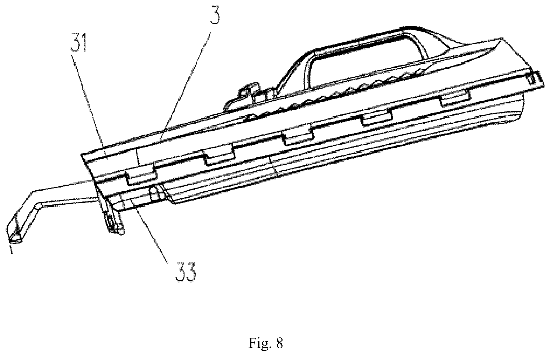

The folding of the collection box is further explained hereinafter. As shown in Fig. 5 to Fig. 8, the collection box 3 will be collected from a usage state. The lower arm portion 352 is disengaged from the adaption with the bottom plate 33 firstly, i.e., the lower arm portion is pulled along the direction of a shaft line C, so that the second cross arm 3522 is disengaged from the clamping groove 331 (as shown in Fig. 6); then the two lower arm portions are rotated along the direction of an arrow as shown in Fig. 6, so that the lower arm portion 352 rotates towards the inside of the collection box around the rotary shaft A to fold up (as shown in Fig. 7), wherein the rotary shaft A is a shaft line extending along the front and back direction. For the definition of the front and back directions, please refer to the definition of the front and back directions in Fig. 5. The rotary shaft A can either be parallel to the horizontal plane, or not parallel to the horizontal plane, as long as the lower arm portion can rotate normally. The side edge portions 34 of the collection box 3 are made of flexible cloth; therefore, when the lower arm portions are folded, the bottom plate 33 and the upper cover 31 can be folded (as shown in Fig. 8), so that the occupied space of the collection box 3 is greatly reduced, and meanwhile, the support assemblies are also adapted with the upper cover, and will not lose.

According to the present invention, the support assemblies are disposed on the collection box, so that the collection box having the support assemblies can be folded to be stored, and occupied space of the collection box is greatly reduced; meanwhile, the support assembly has a simple structure and has a small number of parts, and the weight of the collection box is reduced. It should be noted that the foregoing preferred embodiments are merely to explain the technical conceives and features of the present invention, intended to enable those familiar with this technology to understand the contents of the present disclosure. The scope of the invention is defined by the appended claims.

## Claims

1. A collection box for a grass mower, comprising:
an upper cover (31), a bottom plate (33), side edge portions (34), and support assemblies (35), the support assemblies being disposed between the upper cover (31) and the bottom plate (33), wherein
the support assembly (35) comprises an upper arm portion (351), a lower arm portion (352), and a rotating portion (36), the upper arm portion and the lower arm portion can rotate oppositely around a rotary shaft (A) through the rotating portion (36), and the collection box at least comprises two support assemblies (35),
**characterized in that**:
the upper cover (31) of the collection box is provided with an adaption groove (311) and a fixing element (312), and the bottom plate (33) is provided with a clamping groove (331) and a fixing plate (332).

2. The box according to claim 1, **characterized in that**: the rotary shaft (A) is a shaft line extending in front and behind the collection box.

3. The box according to claim 1, **characterized in that**: the lower arm portion (352) can rotate towards the inside of the collection box around the rotary shaft (A).

4. The box according to claim 1, **characterized in that**: the rotating portion (36) comprises a first adaption portion (361) and a second adaption portion (362), wherein the first adaption portion (361) and the upper arm portion (351) are integrated, and the second adaption portion (362) and the lower arm portion (352) are integrated.

5. The box according to claim 4, **characterized in that**: both the first adaption portion (361) and the second adaption portion (362) are provided with a through hole.

6. The box according to claim 1, **characterized in that**: the collection box is provided with a grass inlet (37), and the support assemblies (35) are arranged at the two sides of the grass inlet (37).

7. The box according to claim 1, **characterized in that**: the side edge portions are made of flexible materials.

8. The box according to claim 1, **characterized in that**: the upper arm portion (351) comprises a first cross arm (3511) and a first vertical arm (3512), the lower arm portion (352) comprises a second cross arm (3522) and a second vertical arm (3521), the first cross arm (3511) is adapted with the adaption groove (311) and the second cross arm (3522) is adapted with the clamping groove (331).

9. The box according to claim 8, **characterized in that**: the upper cover (31) is further provided with a washer (313) which is fixed on the upper cover (31) through a screw (314) and limits the first cross arm (3511).

## Patentansprüche

1. Auffangbehälter für einen Rasenmäher, umfassend:
eine obere Abdeckung (31), eine Bodenplatte (33), Seitenkantenabschnitte (34) und Stütz- bzw. Trägeranordnungen (35), wobei die Stützanordnungen zwischen der oberen Abdeckung (31) und der Bodenplatte (33) angeordnet sind, wobei
die Stützanordnung (35) einen oberen Armabschnitt (351), einen unteren Armabschnitt (352) und einen rotierenden Abschnitt (36) umfasst, wobei sich der obere Armabschnitt und der untere Armabschnitt entgegengesetzt um eine rotierende Welle (A) durch den rotierenden Abschnitt (36) drehen können und der Auffangbehälter zumindest zwei Stützanordnungen (35) umfasst,
**dadurch gekennzeichnet, dass**:
die obere Abdeckung (31) des Auffangbehälters mit einer Adaptionsnut (311) und einem Befestigungselement (312) versehen ist und die Bodenplatte (33) mit einer Klemmnut (331) und einer Befestigungsplatte (332) versehen ist.

2. Behälter nach Anspruch 1, **dadurch gekennzeichnet, dass** die rotierende Welle (A) ein Wellenstrang ist, der sich vor und hinter dem Auffangbehälter erstreckt.

3. Behälter nach Anspruch 1, **dadurch gekennzeichnet, dass** sich der untere Armabschnitt (352) um die rotierende Welle (A) in Richtung der Innenseite des Auffangbehälters drehen kann.

4. Behälter nach Anspruch 1, **dadurch gekennzeichnet, dass** der rotierende Abschnitt (36) einen ersten Adaptionsabschnitt (361) und einen zweiten Adaptionsabschnitt (362) umfasst, wobei der erste Adaptionsabschnitt (361) und der obere Armabschnitt (351) integriert sind und der zweite Adaptionsabschnitt (362) und der untere Armabschnitt (352) integriert sind.

5. Behälter nach Anspruch 4, **dadurch gekennzeichnet, dass** sowohl der erste Adaptionsabschnitt (361) als auch der zweite Adaptionsabschnitt (362) mit einem Durchgangsloch versehen sind.

6. Behälter nach Anspruch 1, **dadurch gekennzeichnet, dass** der Auffangbehälter mit einem Graseinlass (37) versehen ist und die Stützanordnungen (35) an den beiden Seiten des Graseinlasses (37) angeordnet sind.

7. Behälter nach Anspruch 1, **dadurch gekennzeichnet, dass** die Seitenkantenabschnitte aus flexiblen Materialien bestehen.

8. Behälter nach Anspruch 1, **dadurch gekennzeichnet, dass** der obere Armabschnitt (351) einen ersten Querarm (3511) und einen ersten vertikalen Arm (3512) umfasst, der untere Armabschnitt (352) einen zweiten Querarm (3522) und einen zweiten vertikalen Arm (3521) umfasst, der erste Querarm (3511) mit der Adaptionsnut (311) adaptiert ist und der zweite Querarm (3522) mit der Klemmnut (331) adaptiert ist.

9. Behälter nach Anspruch 9, **dadurch gekennzeichnet, dass** die obere Abdeckung (31) ferner mit einer Unterlegscheibe (313) versehen ist, die über eine Schraube (314) an der oberen Abdeckung (31) befestigt ist und den ersten Querarm (3511) begrenzt.

## Revendications

1. Boîte de collecte pour une tondeuse, comprenant :
un couvercle supérieur (31), une plaque inférieure (33), des portions de bord latérales (34), et des ensembles de support (35), les ensembles de support étant disposés entre le couvercle supérieur (31) et la plaque inférieure (33), dans laquelle
l'ensemble de support (35) comprend une portion de bras supérieure (351), une portion de bras inférieure (352), et une portion rotative (36), la portion de bras supérieure et la portion de bras inférieure peuvent tourner dans des sens opposés autour d'un arbre de rotation (A) à travers la portion rotative (36), et la boîte de collecte comprend au moins deux ensembles de support (35),
**caractérisée en ce que** :
le couvercle supérieur (31) de la boîte de collecte est pourvu d'une rainure d'adaptation (311) et d'un élément de fixation (312), et la plaque inférieure (33) est pourvue d'une rainure de serrage (331) et d'une plaque de fixation (332).

2. Boîte selon la revendication 1, **caractérisée en ce que** : l'arbre de rotation (A) est une ligne d'arbre s'étendant devant et derrière la boîte de collecte.

3. Boîte selon la revendication 1, **caractérisée en ce que** : la portion de bras inférieure (352) peut tourner vers l'intérieur de la boîte de collecte autour de l'arbre de rotation (A).

4. Boîte selon la revendication 1, **caractérisée en ce que** : la portion rotative (36) comprend une première portion d'adaptation (361) et une seconde portion d'adaptation (362), dans laquelle la première portion d'adaptation (361) et la portion de bras supérieure (351) sont intégrées, et la seconde portion d'adaptation (362) et la portion de bras inférieure (352) sont intégrées.

5. Boîte selon la revendication 4, **caractérisée en ce que** : à la fois la première portion d'adaptation (361) et la seconde portion d'adaptation (362) sont pourvues d'un trou traversant.

6. Boîte selon la revendication 1, **caractérisée en ce que** : la boîte de collecte est pourvue d'une entrée d'herbe (37), et les ensembles de support (35) sont agencés des deux côtés de l'entrée d'herbe (37).

7. Boîte selon la revendication 1, **caractérisée en ce que** : les portions de bord latérales sont constituées de matériaux souples.

8. Boîte selon la revendication 1, **caractérisée en ce que** : la portion de bras supérieure (351) comprend un premier bras transversal (3511) et un premier bras vertical (3512), la portion de bras inférieure (352) comprend un second bras transversal (3522) et un second bras vertical (3521), le premier bras transversal (3511) est adapté à la rainure d'adaptation (311), et le second bras transversal (3522) est adapté à la rainure de serrage (331).

9. Boîte selon la revendication 8, **caractérisée en ce que** : le couvercle supérieur (31) est en outre pourvu d'une rondelle (313) qui est fixée sur le couvercle supérieur (31) par l'intermédiaire d'une vis (314) et qui limite le premier bras transversal (3511).
